Europäisches Patentamt

**European Patent Office**

**Office européen des brevets**

(19)

(11) Publication number: **0 171 244**
A2

# (12) EUROPEAN PATENT APPLICATION

(21) Application number: **85305372.6**

(22) Date of filing: **29.07.85**

(51) Int. Cl.⁴: **H 02 K 1/06**

(30) Priority: **30.07.84 GB 8419400**

(43) Date of publication of application: **12.02.86 Bulletin 86/7**

(84) Designated Contracting States: **CH DE FR IT LI**

(71) Applicant: **HORSTMANN GEAR GROUP LIMITED, Newbridge Works, Bath BA1 3EF (GB)**

(72) Inventor: **Clifford, Cecil Frank, 45 Prior Park Road, Bath BA2 4NF (GB)**

(74) Representative: **Powell, Stephen David et al, J.F. Williams & Co. 34 Tavistock Street, London WC2E 7PB (GB)**

(54) Electric motors.

(57) In an electric motor comprising a rotor (20) and a stator (10) with inner pole elements (11) and outer pole elements (12), the junction between the inner and outer pole elements is at a distance $\chi$ from the rotor axis, where $\chi$ is 0.7100 to 0.8608 and preferably $\dfrac{\pi}{4}$ of the radius of the stator or rotor.

The stator or rotor poles may be staggered as disclosed in U.K. Patents 1600380 and 2093277.

1

## Electric Motors

The present invention relates to electric motors and more particularly to motors comprising a rotor and a stator which comprises radially inner and outer sets of pole elements. Such motors are disclosed in U.K. Patents 1600380 and 2093277 in which either the pole elements of the inner set are staggered in a circumferential direction relative to the pole elements of the outer set and the rotor comprises straight elements which each extend over substantially the whole radius, or the pole elements of the sets are radially aligned and the rotor comprises inner and outer sets of elements staggered in a circumferential direction. In the motors disclosed in U.K. Patent 1600830, the inner limit of the outer elements and the outer limit of the inner elements are at approximately two thirds of the radius of the stator or rotor.

The present invention seeks to provide a motor with improved performance.

According to the present invention there is provided an electric motor comprising a rotor and a stator which faces the rotor and which comprises radially inner and outer sets of pole elements, characterised in that the junction between the inner and outer sets lies at a distance ($x$) from the axis of the rotor which is within the range 0.7100 to 0.8608 of the radius of the stator or rotor.

A motor in accordance with the previous paragraph has the advantage of improved running characteristics. In addition satisfactory starting characteristics may be maintained.

The preferred range for $\underline{x}$ is 0.73 to 0.84 and the optimal value, bearing in mind the requirements of both running and self-starting, is substantially equal to $\frac{\pi}{4}$.

In a first preferred embodiment, the stator pole elements of the inner set are circumferentially staggered relative to the elements of the outer set and the rotor comprises radially straight elements.

In a second preferred embodiment the stator pole elements are radially aligned and instead the rotor comprises radially inner and outer sets of elements staggered in a circumferential direction. In the latter case each pair of aligned stator pole elements may form a single pole member.

A preferred embodiment of the present invention will now be described, by way of example only, with reference to the accompanying drawings, of which:

Fig.1 shows the stator of a motor in accordance with the present invention;

Fig.2 shows a rotor for use with the stator of Fig.1; and

Fig.3 is a graph for use in explaining the present invention.

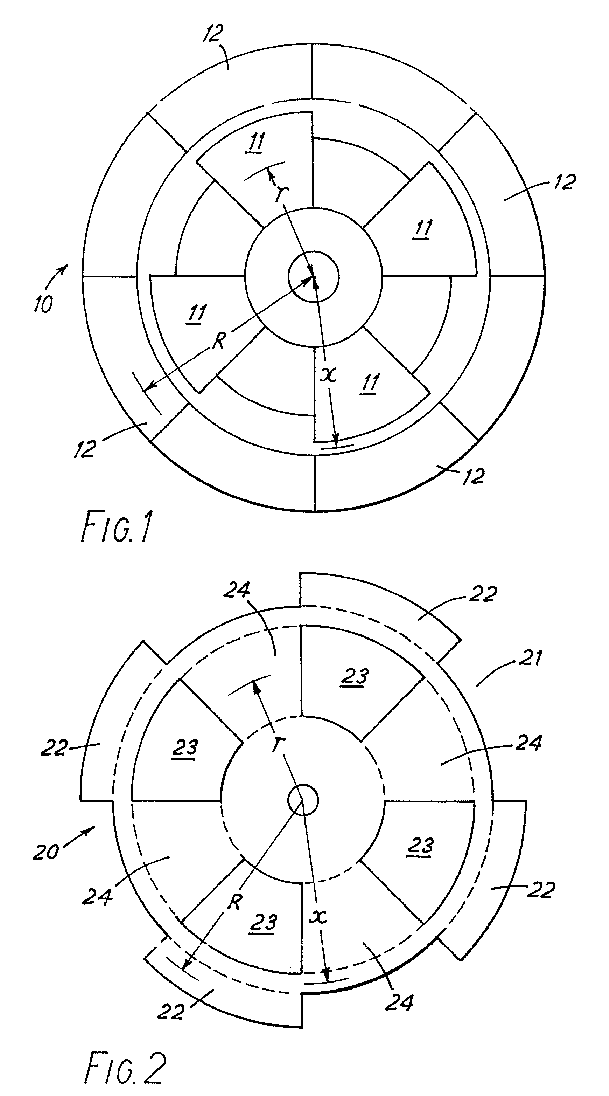

Referring now to the drawings, Fig 1 shows a stator 10 comprising four equiangularly displaced inner pole elements 11 and four outer pole elements 12, each radially aligned with a respective element 11. The area of the pole face of each element 11 is $\underline{a}$ acting at an effective radius $\underline{r}$. The area of the pole face of each element 12 is $\underline{b}$ acting at an effective radius R.

Fig.2 shows a rotor 20 for use with the stator 10 and comprising a disc of magnetic material having at its circumference four equiangularly displaced slots 21 which divide the disc into four circumferential elements 22. Four apertures 23 are also provided in the disc with radially extending edges in alignment with the edges of elements 22. The apertures 23 divide the inner portion of the rotor into four elements 24 disposed inwardly of the elements 22 and staggered in a circumferential direction relative thereto. The areas of elements 22 and 24 (between the dotted lines) are substantially equal to the areas $\underline{b}$ and $\underline{a}$ of pole elements 12 and 11 respectively.

If the areas $\underline{a}$ and $\underline{b}$ were approximately the same the outer poles would make a bigger contribution to the output because they act at a larger radius than the inner poles. To ascertain the optimal position of the junction between the inner and outer poles let this be at a distance $\underline{x}$ from the rotor axis, regarding the radius of the rotor as unity. (The calculations are equally valid for the rotor or stator).

The torque contributed by each set of poles is proportional to their area multiplied by their radius of operation.

$$r = \frac{x}{\sqrt{2}}$$

$$R = \frac{1 + x}{2}$$

Thus for the outer poles,

4

Area $\underline{b}$ x radius R = $(\pi - \pi x^2) \times \dfrac{1+x}{2}$

For the inner poles,

Area $\underline{a}$ x radius $\underline{r}$ = $\pi x^2 \times \dfrac{x}{\sqrt{2}}$

At the optimum position these two expressions should be equal, i.e.

$$1 - x^2 + x = 2.414\ x^3 .$$

This equation is satisfied by $x = \dfrac{\pi}{4}$

i.e. x = 0.7854.

The area taken up by the rotor hub is very small, and when multiplied by the very small radius of operation can be considered negligible. Accordingly it has been ignored in the above calculations.

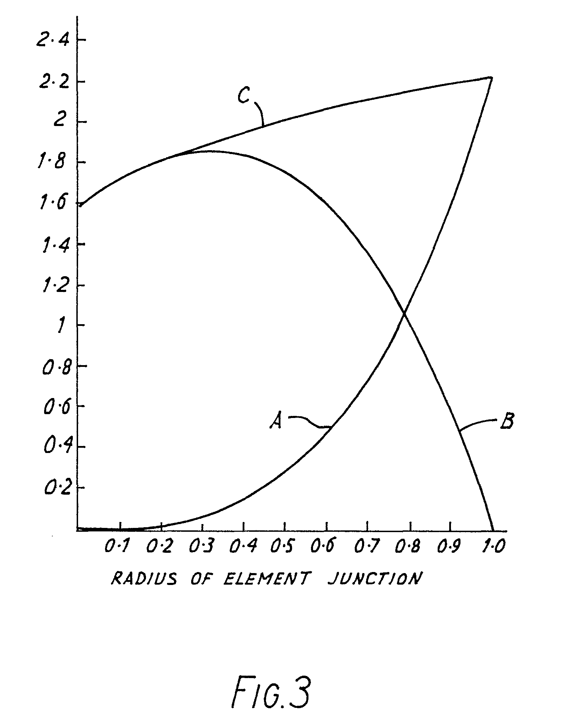

Figure 3 shows a graph of the expression ar + bR against distance $\underline{x}$ (Curve C).

Curve A represents ar and Curve B represents bR plotted against distance $\underline{x}$ . It will be seen that optimum performance occurs at a value of 0.7854. Significant improvements in performance are obtained between the values of 0.7100 and 0.8608. There is a fall in the self-starting characteristics as compared to the motors of patent 1600380 and patent application 2093277, but this is balanced by an improvement in running. Above 0.8608 the deterioration in the self-starting characteristics becomes unacceptable.

5

In a modification of the above described embodiment the rotor elements are radially aligned and the stator elements are circumferentially staggered, similar to the arrangement shown in Figs 2 and 3 of U.K. Patent 1600380. The other features and the various other modifications disclosed in Patent 1600380 and in Patent Application 2093277 may also be incorporated in motors according to the present invention.

0171244

6

## Claims

1. An electric motor comprising a rotor (20) and a stator (10) which faces the rotor and which comprises radially inner (11) and outer (12) sets of pole elements, characterised in that the junction between the inner and outer sets lies at a distance ($\underline{x}$) from the axis of the rotor which is within the range 0.7100 to 0.8608 of the radius of the stator or rotor.

2. A motor according to Claim 1, wherein the value is within the range 0.73 to 0.84.

3. A motor according to Claim 2, wherein the value is substantially equal to $\dfrac{\pi}{4}$.

4. A motor according to any preceding claim wherein the stator pole elements of the inner set are circumferentially staggered relative to the elements of the outer set and the rotor comprises radially straight elements.

5. A motor according to any of Claims 1 to 3, wherein the inner (11) and outer (12) stator pole elements are radially aligned and the rotor comprises inner (24) and outer (22) sets of elements which are relatively staggered in a circumferential direction.

6. A motor according to Claim 5, wherein the members of each pair of radially aligned stator pole elements form a single pole member.

FIG.1

FIG.2

FIG.3